Europäisches Patentamt

European Patent Office

Office européen des brevets

(19)

(11) Veröffentlichungsnummer : **0 276 267 B1**

(12) **EUROPÄISCHE PATENTSCHRIFT**

(45) Veröffentlichungstag der Patentschrift :
27.12.91 Patentblatt 91/52

(51) Int. Cl.⁵ : **B29D 15/00, B29C 43/22,**
**B29C 43/02**

(21) Anmeldenummer : 87904864.3

(22) Anmeldetag : 16.07.87

(86) Internationale Anmeldenummer :
PCT/EP87/00385

(87) Internationale Veröffentlichungsnummer :
WO 88/00883 11.02.88 Gazette 88/04

(54) VERFAHREN ZUR HERSTELLUNG GEZAHNTER PROFILTEILE AUS KUNSTSTOFFEN, DANACH HERGESTELLTES ERZEUGNIS SOWIE DRUCKWERKZEUG.

(30) Priorität : 25.07.86 AT 2019/86

(43) Veröffentlichungstag der Anmeldung :
03.08.88 Patentblatt 88/31

(45) Bekanntmachung des Hinweises auf die
Patenterteilung :
27.12.91 Patentblatt 91/52

(84) Benannte Vertragsstaaten :
BE CH DE FR GB IT LI LU NL SE

(56) Entgegenhaltungen :
EP-A- 0 018 456
WO-A-84/04951
BE-A- 432 359
CH-A- 337 890
DE-C- 292 671
FR-A- 969 140
FR-A- 1 170 851
FR-A- 2 096 515
US-A- 1 719 290

(56) Entgegenhaltungen :
US-A- 2 953 816
US-A- 4 598 541
Kunststoffe, vol. 72, no 12, December 1982,
(München, DE), H. Edelmann et
al.:"Spritzgiesspressgereckte Polyoxymethy-
len-Zahnräder. Struktur- und Orientierungsuntersuchungen", p. 780-784, see page 780,
lines 1-20
Patent Abstracts of Japan, vol. 9, no 22
(M-354)(1745), 30 January 1985, & JP, A,
59167227 ( SEGISUI KAGAKU KOGYO K.K. )20
September 1984

(73) Patentinhaber : FAIGLE, Heinz
Kohlplatz 8
A-6971 Hard (AT)

(72) Erfinder : FAIGLE, Heinz
Kohlplatz 8
A-6971 Hard (AT)

(74) Vertreter : Hefel, Herbert, Dipl.-Ing.
Egelseestrasse 65a
A-6800 Feldkirch-Tosters (AT)

EP 0 276 267 B1

## Beschreibung

Die Erfindung bezieht sich auf ein Verfahren zur Herstellung von gezahnten Profilteilen, beispielsweise von Zahnstangen, Zahnkränzen, Zahnsegmenten od. dgl., wobei das Material eines Vorfabrikates unter plastischer Verformung mittels eines Werkzeuges in die gezahnte Profilierung eines Gegenwerkzeuges prägend eingepreßt wird.

Der Begriff "Vorfabrikat" sollte die zwar theoretisch gemeinsamen, aber in der Praxis doch unterschiedlich gebrauchten Begriffe "Vorformling" und "Halbzeug" zusammen decken. Das Umformen von Kunststoffen nach Verfahren der Metallverarbeitung ist an sich bekannt. Die technologischen Eigenschaften thermoplastischer Kunststoffe lassen sich dabei durch Reckprozesse verbessern. In der Praxis nützt man diese Erkenntnis seit längerem bei der Herstellung von Fasern, Folien und Hohlkörpern. Ein weiteres Beispiel sind biaxial verstreckte Acrylglasplatten, die in der Flugzeugindustrie eingesetzt werden. Aber auch auf dem Formteilsektor wurde eine solche Eigenschaftsmodifizierung bekannt und es wurde möglich, technische Konstruktions- und Bauteile mit für den jeweiligen Einsatzzweck verbesserten Eigenschaften herzustellen. In diesem Zusammenhang gehört auch zum Stand der Technik, Zahnräder durch Spritzgießpreßrecken zu fertigen, wodurch belastungsgerechte, partiell orientierte Bereiche in dem Bauteil ausgebildet werden können, so daß dessen Gebrauchseigenschaften verbessert werden. Bei diesen bekannten Verfahren wird zuerst ein Hohlzylinder gespritzt und während seiner Abkühlphase im gleichen Werkzeug, jedoch bei geändertem Formnest zu einem Zahnrad ausgeformt. Dieses Preßrecken beeinflußt den morphologischen Aufbau des Werkstückes. Zeigen gespritzte Zahnräder überwiegend eine grobsphärolitische Struktur mit Transkristallisation an den Randzonen und lassen sie Orientierungseffekte nicht erkennen, so zeigt der preßgereckte Zahn eines nach dem Spritzpreßrecken hergestellten Zahnrades ein dem gegenüber vollständig verändertes Aussehen. Ausgehend von den Randzonen sind hohe Deformationsbereiche am Zahnfuß und an der Zahnflanke zu erkennen, die einen allmählichen Übergang zum Teilinneren aufweisen. In den deformierten Bereichen konnten dabei mittels Doppelbrechung und Röntgenstreuung ausgeprägte Molekularorientierungen nachgewiesen werden, die in erster Linie für die Qualitätsverbesserung verantwortlich sind.

Hier in diesem Zusammenhang ist auch noch die US-PS 4 598 451 zu nennen. Nach dieser Vorveröffentlichung wird ein metallisches, vorgeformtes Rohr bzw. Wandabschnitte desselben dadurch zu einer Zahnstange umgeformt, daß ein Teil dieses Wandmaterials unter plastischer Verformung mittels eines Stempels in die gezahnte Profilierung eines Gegenwerkzeuges prägend eingepreßt wird. Dieses bekannte Verfahren zielt darauf ab, auf einfache Weise hochbelastbare metallische Maschinenteile in kurzer Arbeitszeit herstellen zu können.

Die Erfindung zielt darauf ab, dieses bekannte Verfahren zu verbessern, d. h., den Verformungsgrad bei der Herstellung gezahnter Profilteile zu vergrößern, um dadurch die Molekularorientierung im Sinne einer gesteigerten Qualitätsverbesserung zu beeinflussen, was vorschlagsgemäß dadurch gelingt, daß die mit dem Vorfabrikat in Wirkverbindung tretenden, formenden Flächen beider Werkzeuge zumindest annähernd korrespondierende, gezahnte Profilierungen aufweisen; daß beim Prägevorgang die Werkzeuge einander so weit genähert werden, daß die Zähne der Profilierung des einen Werkzeuges in die Zahnlücken der Profilierung des anderen Werkzeuges bzw. umgekehrt dringen; daß das Vorfabrikat aus thermoplastischem teilkristallinem Kunststoff besteht und zumindest in einem Teil seines zu verformenden Bereiches eine unterhalb seiner Schmelztemperatur liegende Verarbeitungstemperatur aufweist und dort durch die erfindungsgemäße Verfahrensausübung eine mehrdimensionale Molekülorientierung mittels Reckung erfährt; daß die in Präge- oder Arbeitsrichtung gemessene Dicke des Vorfabrikates der doppelten bis halben Tiefe bzw. Höhe der gezahnten Profilierung der Werkzeuge entspricht. Dazu wird dem preßzureckenden Vorfabrikat nicht nur ein unidirektional möglicher Verformungsfluß in das geänderte oder insgesamt neue Formnest freigegeben, sondern auch von seinem Gegenbereich her ein Formungszwang ausgeübt, indem annähernd konturkonform zum Hauptbereich (Verzahnung) eine gestaltgebende Kraft ausgeübt wird. Dieses ist auch in der Gegenrichtung und kompensierend wirksam. Das heißt: Der Werkstoff wird nicht nur dem Überdruck nachgebend seine Außenkontur finden (also sich der Innenkontur des Formnestes anschmiegen), sondern auch von der Innenseite bzw. Gegenseite her annähernd konturkonform mitgeprägt; das Innenwerkzeug prägt ein und mit. Durch diese Maßnahme lassen sich wesentlich intensivere Orientierungs- bzw. Reckstrukturen ausbilden. Nach den erfindungsgemäßen Vorschlägen wird also erreicht, daß das gezahnte Profil möglichst umfassend und möglichst über sein gesamtes Volumen eine Druckreckung erfährt, um so diesen Maschinenteil im extremen Ausmaß belastungsfähig zu machen.

Eine solche Zusatzverformung kann der Formgebung im Hauptbereich (Verzahnung) mit 180° gegenüberliegen. Man könnte eine solche Vorgangsweise als zweidimensional bezeichnen. Die Gegenverformung kann aber auch in einem anderen Winkel als 180° in die Gegenseite eingreifen, z. B. mit zwei Verformungsrichtungen, die um je 60° versetzt mit der im Hauptbereich angestrebten Zahnbildung angreifen. In diesem Falle könnte

2

von einem dreidimensionalen Verformungseingriff im inneren (Gegen-) Bereich gesprochen werden. Darauf wird im folgenden noch näher eingegangen.

Zur Definition von Begriffen und zum Stand der Technik wird wie folgt Bezug genommen:

Unter "Orientierung" wird im Nachstehenden jede bevorzugte Werkstoffausrichtung verstanden, wobei unberücksichtigt bleibt, ob sie durch Schmelzefluß oder Reckung unterhalb des Schmelzbereiches zustande gekommen ist.

Unter "Reckung" wird eine Orientierungserteilung unterhalb des Schmelzbereiches verstanden.

Nachstehend wird das erfindungsgemäße Verfahren nochmals mit anderen Worten umrissen, um seine Bedeutung noch klarer herauszustellen.

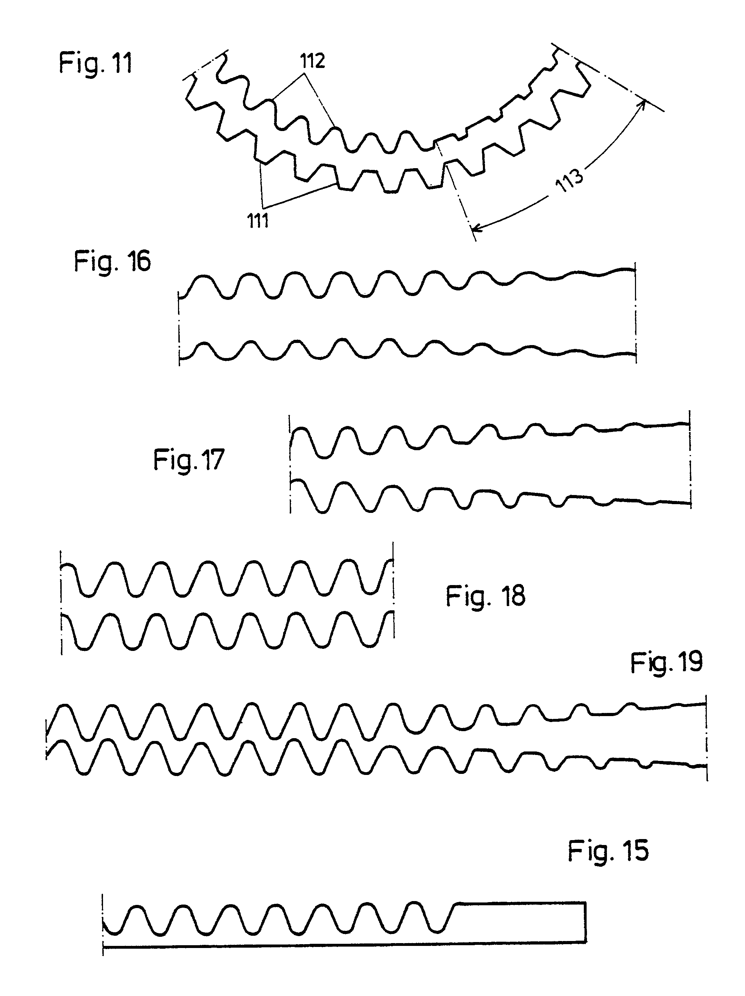

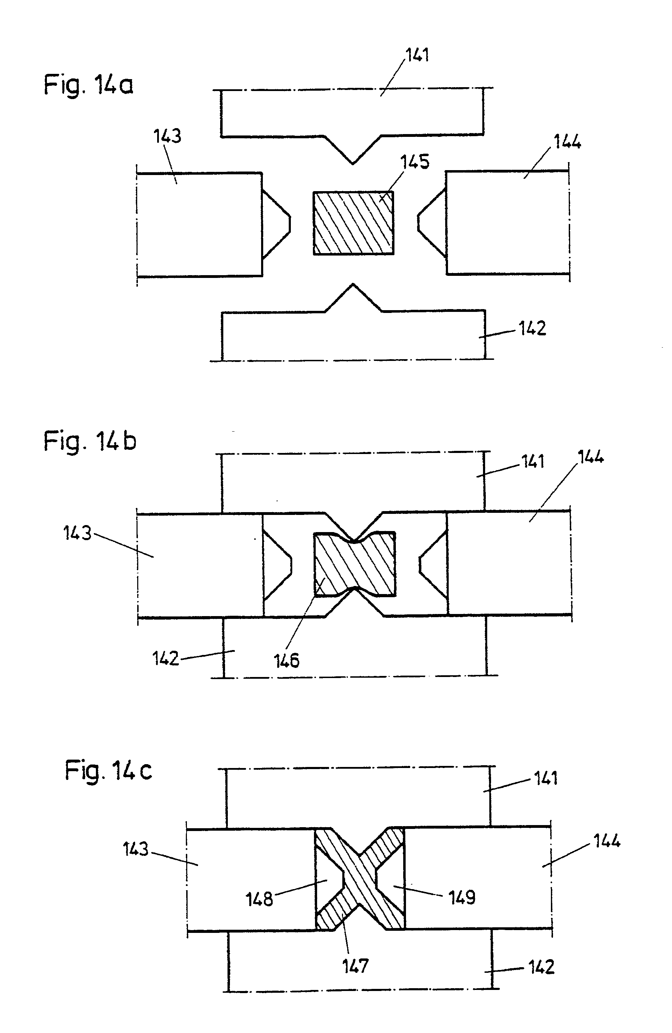

Es soll der Druck-Reckvorgang dadurch besonders wirksam vollzogen werden, daß einander gegenüberliegende oder anliegende formgebende Werkzeugteile in Gesamtsumme, bevorzugt aber auch in jeder Einzelsumme, annähernd volumensgleiche Ausbuchtungen und Einbuchtungen in das Vorfabrikat einprägen, und sich diese Ausbuchtungen und Einbuchtungen annähernd gegenüberliegen, wodurch das zur Druckverformung gelangende Vorfabrikat einer hochgradigen Reckung unterzogen wird. Die Basis dieser Reckung bildet das Eindringen der formgebenden Werkzeuge in den Hauptbereich und in den Gegenbereich. Fig. 16 zeigt recht anschaulich, daß sich dabei ohne wesentliche gegenseitige Beeinflussung beider Bereiche in jedem der Bereiche eine anfängliche Reckstruktur ausbildet, indem sich die Oberfläche dem eindringenden Werkzeug konturkonform mit Ein- und Ausbuchtungen anschmiegt und die oberflächennahen Zonen diesem Vorgang folgen. Von Fig. 17 bis Fig. 19 ist sodann das Verformen immer volumensärmerer Vorfabrikate gezeigt. Es ist deutlich sichtbar, daß sich nunmehr zusätzlich zur reckenden Oberflächendeformation immer mehr die wesentliche, im Inneren wirkende Reckung infolge des Eindringens einer annähernden Gegenverzahnung bemerkbar macht, die zusammen mit der Verzahnung auf der Hauptseite bewirkt, daß die Zahnflanken und die ihnen naheliegenden Zonen einem kombinierten Reckungszug und Reckungsschub unterliegen. Wichtig ist dabei die Erkenntnis, daß der Reckungsgrad davon abhängt, welches Volumen das Vorfabrikat pro einer bestimmten Zone, z.B. einer Zahnteilung, in den Verformungsbereich einbringen soll und in welchem Volumensverhältnis und Gestaltverhältnis die Kontur des verformenden Werkzeuges dazu steht. Es wird also der Querschnitt bzw. das zonenweise Volumen des zur Verformung vorgesehenen Vorfabrikates in jeweils jener Größenordnung gewählt, mittels derer sowohl der Reckungsgrad als auch die Wandstärken des zu fertigenden Teiles im Hinblick auf die Eingriffsparameter des Druckwerkzeuges beim verformenden Einschließen vorgegeben werden.

Dabei soll bei der Herstellung von Formteilen, die insgesamt oder (im Quer- oder Längsschnitt) teilweise Zahnungen tragen sollen, dem Vorfabrikat außer der zum späteren Gebrauch bestimmten Zahnform der Hauptseite, auch auf der gegenüberliegenden Seite oder anliegenden Seite bzw. Seiten oder einer Kombination von diesen, eine verzahnungsähnliche Form gleicher Teilung eingeprägt werden, bevorzugt in einer Wellen- oder Zahn- oder Zickzack-Linie bzw. -Fläche oder Einprägungen analog der Folge von becherartigen Vertiefungen, wobei das Prägen so gehandhabt wird, daß die mittels der vorgenannten Maßnahmen entstehenden Höhlungen wenigstens in Teilhöhe im oder zumindest unter dem jeweiligen Zahnfuß der hauptseitigen Hauptverzahnung eingedrückt werden und daß die Verformung diskontinuierlich oder schrittweise oder kontinuierlich erfolgt und dabei die Reckverformung sowohl in einem Zuge, als auch allmählich prägend durchgeführt werden kann.

Die vorstehend im Prinzip geschilderte Recktechnik wird bevorzugt dergestalt angewendet, daß sich keine Längung oder Kürzung (also keine wesentliche Änderung) anwendungstechnisch wichtiger Maße ergibt. Wenn also die Länge (die Zahnteilung) das Kriterium ist, wird man erwünschte Verformungsnebentriebe beispielsweise in die Zahnnebenbreite, z.B. zur Ausbildung einer Seitenwange gehen lassen oder unbrauchbare Nebentriebe später spanabhebend beseitigen.

Dabei wird zwischen recktechnischen und gestaltgeberischen Forderungen zu unterscheiden sein.

Weiterhin ist das erfindungsgemäße Verfahren dadurch gekennzeichnet, daß während des formgebenden Druckvorganges die formenden Flächen des Druckwerkzeuges soweit einander genähert werden, daß die gedachten Ebenen, die jeweils die höchsten Erhebungen der formgebenden Flächen beinhalten, zusammenfallen oder sich gegenseitig durchdringen.

Ein nach der linearen, kreisenden oder hybridischen Methode wirkendes Druckwerkzeug zur Ausübung des Verfahrens mit mindestens zwei gegeneinander verstellbaren formgebenden Flächen ist nun dadurch gekennzeichnet, daß die beiden formgebenden Flächen nach der Form der zu fertigenden Zahnung profiliert sind, wobei die beiden Profilierungen unter Berücksichtigung der Wanddicke des angestrebten Formlings wenigstens annähernd gleich gestaltet sind und gegeneinander um zirka die halbe Teilung der Zahnform versetzt sind und der Abstand der zahnformgebenden Flächen bei geschlossenem Druckwerkzeug bevorzugt gleich oder kleiner ist als die Zahnhöhe des zu profilierenden Formlings.

Anhand der Zeichnung wird die Erfindung näher beschrieben und erläutert. Es zeigen:

Fig. 1 das noch offene Druckwerkzeug mit eingelegtem Formling;

Fig. 2 das geschlossene Druckwerkzeug;

Fig. 3 den Längsschnitt durch eine Zahnstange und

Fig. 4 den Querschnitt gemäß der Schnittlinie IV-IV in Fig.3;

Fig. 5 einen Längsschnitt durch eine Zahnstange, die herkömmlicherweise gefertigt ist und

Fig. 6 einen Querschnitt im Sinne der Darstellung nach Fig. 3, wobei bei den Fig. 5 und 6 die Recklinien eingezeichnet sind; die

Fig. 7 bis 10 zeigen verschiedene Längsschnittformen von Zahnleisten;

Fig.11 einen dem Kreisbogen folgenden Schnitt durch einen Zahnkranzteil;

Fig.12 ein Schema der Innenwalzung von Zahnkränzen;

Fig.13 ein Schema eines Druckwerkzeuges mit drei Formungsebenen;

Fig.14 ein vierteiliges Druckwerkzeug und dessen Wirkungsweise;

Fig.15 bis 19 Darstellungen von längshalbierten Verformungseinlaufstücken von Zahnstangen, wobei Fig. 15 herkömmliche und Fig. 16 bis 19 erfindungsgemäß hergestellte Formlinge zeigen, samt Reckungsgradzunahme mittels zunehmender Zahnungsdurchdringung.

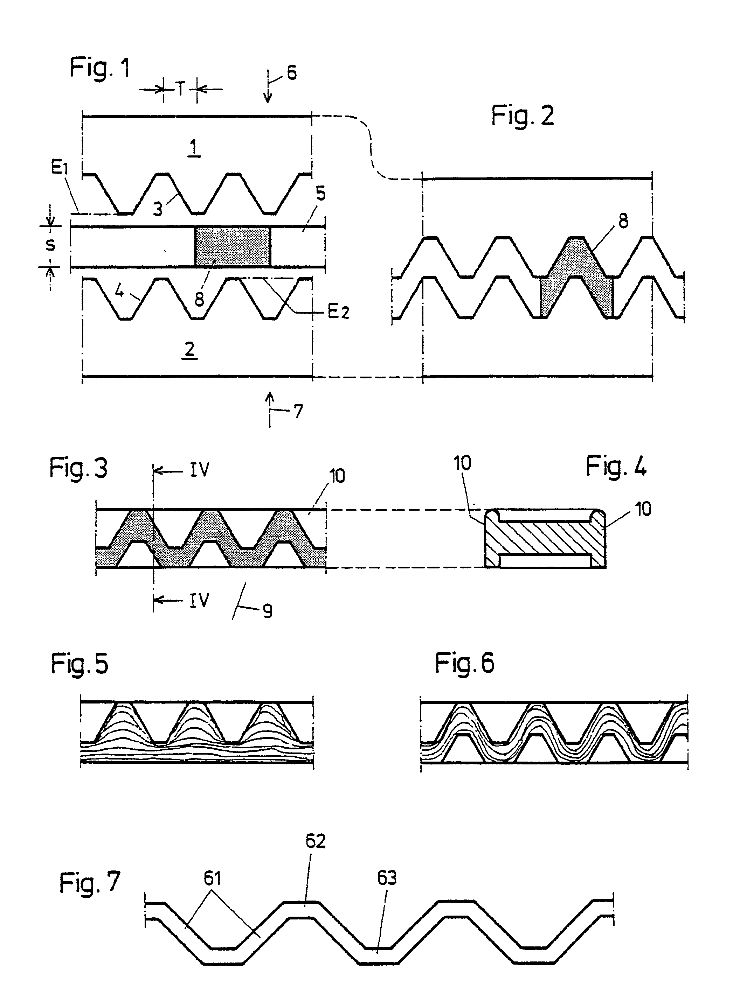

In Fig. 1 und 2 ist daß Verfahren in einem einfachen Beispiel dargestellt. Fig. 1 veranschaulicht ein noch geöffnetes Druckwerkzeug mit seinen beiden Druckbacken 1 und 2 und den einander zugewandten formgebenden Flächen 3 und 4, deren Gestaltung der zu formenden Zahnung entsprechen. Die durch die Flächen 3 und 4 vorgegebenen Negativformen sind gegeneinander um eine halbe Teilung T versetzt, so daß korrespondierende Ausbuchtungen bzw. Einbuchtungen innerhalb des Druckwerkzeuges einander gegenüberliegen. Das Vorfabrikat 5 ist platten- oder stabartig ausgebildet und seine Stärke ist mit S bezeichnet. Die höchsten Erhebungen der formgebenden flächen 3 und 4 liegen auf gedachten Ebenen $E_1$ und $E_2$. Dieses Vorfabrikat 5 hat hier über seine gesamte Ausdehnung gleiche Querschnitte. Es kann stranggepreßt oder gegossen oder nach einem anderen Verfahren der Kunststofftechnik hergestellt sein, auch kann es bereits vorgeformt und-/oder einem Orientierungsprozeß unterworfen worden sein. Das Vorfabrikat kann ferner Raumtemperatur besitzen oder auch eine höhere Temperatur, jedoch zumindest in Teilbereichen unterhalb seiner Schmelztemperatur. Diese erhöhte Temperatur kann über den Querschnitt des Vorfabrikates gleichmäßig verteilt sein, es können aber auch über den Querschnitt gesehen Zonen erhöhter Temperatur solchen mit niedrigerer Temperatur gegenüberstehen. Das wird samt Gestalt und Herkunft des Vorfabrikates im folgenden noch im Detail erläutert werden.

Zum Schließen des Druckwerkzeuges werden die beiden Druckbacken 1 und 2 in Richtung der Pfeile 6 und 7 gegeneinander bewegt, so daß der Abstand der formgebenden Flächen 3 und 4, gemessen in Richtung der Zustellbewegung - gleich oder kleiner wird als es der Stärke oder Dicke S des formlings 5 entspricht. Die geschlossene form zeigt Fig. 2. Der im Formling 5 (Fig. 1 und Fig. 2) hervorgehobene Bereich 8 soll dabei verdeutlichen, daß sich der formling bei der Druckreckung zwar in sich gereckt hat, aber pro betrachtetem Abschnitt 8 annähernd volumsgleich geblieben ist, so daß diese Verformungsvorgänge auf das Werkstück als Ganzes bezogen, zu keiner wesentlichen Verlängerung desselben führen. Bei der Beurteilung der Volumsähnlichkeit müssen die Querschnittskonturen als Gesamtes berücksichtigt werden. Dies veranschaulicht Fig. 3 im Zusammenhang mit dem Längsschnitt durch eine Zahnstange 9, welche verstärkende Randstege 10 besitzt. Einen Querschnitt nach der Linie IV-IV soll diese Zahnstange veranschaulichen. Ausgehend von einem formling mit rechteckigem Querschnitt wird bei der verformenden Umwandlung das Material in die Höhe und in die Breite gereckt, ohne daß das Profil in seiner Gesamtheit verlängert wird.

Bei der Formung dieser Zahnstange nach den Fig. 3 und 4 wurden die formgebenden Werkzeugteile 1 und 2 soweit in Richtung der Pfeile 6 und 7 zusammengefahren, daß die gedachten Ebenen $E_1$ und $E_2$ sich gegenseitig durchdrungen haben. In Fig. 3 ist die Lage dieser Ebenen $E_1$ und $E_2$ bei geschlossenem Druckwerkzeug angedeutet.

Fig. 5 zeigt einen Längsschnitt durch eine Zahnstange, die in herkömmlicherweise gefertigt worden ist; Fig. 6 eine Zahnstange, die nach dem erfindungsgemäßen Verfahren und mit dem erfindungsgemäßen Werkzeug gefertigt wurde. In diese Längsschnitte sind andeutungsweise die sogenannten Recklinien eingetragen. Die herkömmlich gefertigte Zahnstange nach Fig. 5, die nur auf einer Seite profiliert ist, zeigt, daß das Bild der Recklinien sehr unregelmäßig ist mit den daraus resultierenden Mängeln, wie unterschiedliche Spannungswerte und uneinheitlichem mechanischem Widerstand der einzelnen Querschnitte über die Länge des Werkstückes gesehen. Diese Recklinien zeigen auch an, wie das Material des Formlings während der formgebenden Druckeinwirkung im Druckwerkzeug geflossen ist.

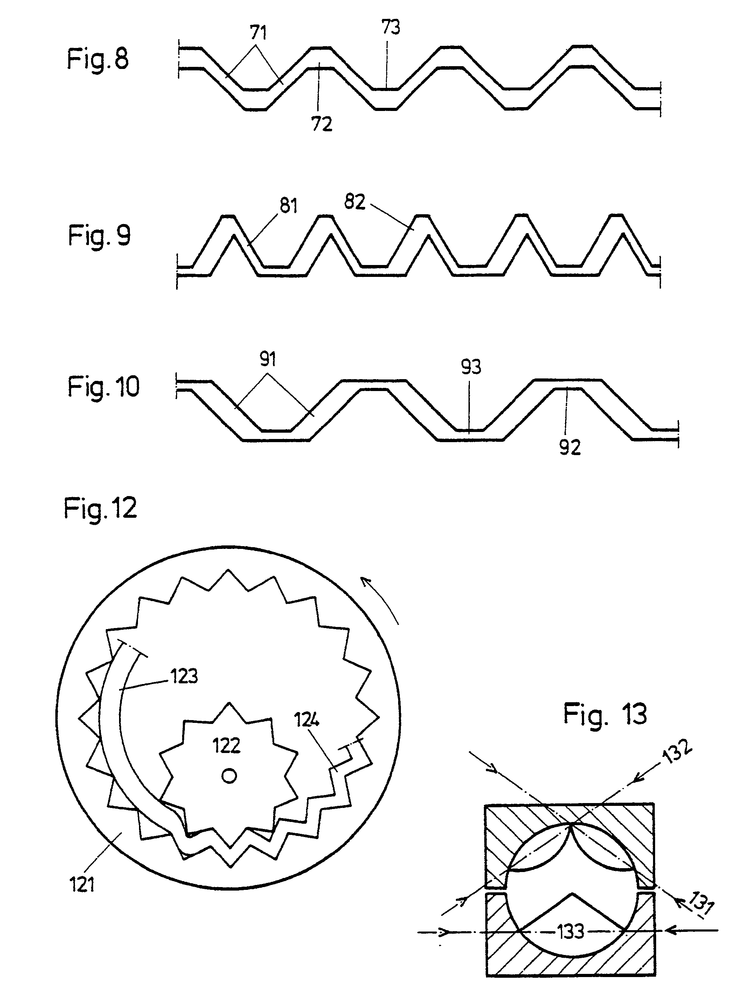

Die Fig. 7, 8, 9 und 10 zeigen Zahnstangenlängsschnitte unterschiedlicher Gestalt, die nach dem erfindungsgemäßen Verfahren hergestellt sind. Die Zahnstange nach Fig. 7 wurde mit einem Druckwerkzeug hergestellt, bei welchem die formgebenden Flächen beider Werkzeugbacken 1 und 2 gleich gestaltet sind. Bei den anderen drei Ausführungsbeispielen nach den Fig. 8 bis 10 ist das nicht der Fall. Diese Unterschiede in der Gestalt der formgebenden Fläche des Werkzeuges bedingen ungleiche Reckung bzw. Orientierung des Materials, was unter Berücksichtigung des jeweiligen Anwendungsfalles des Werkstückes angestrebt werden kann.

4

EP 0 276 267 B1

Als Werkzeuge kommen solche in Betracht, die gegeneinander linear bewegt werden, wie dies im Zusammenhang mit den Fig. 1 und 2 gezeigt ist. Es ist aber auch denkbar, das Werkzeug als sich drehende Scheiben oder Walzen auszugestalten, zwischen welchen das Vorfabrikat durchgeführt wird. Dabei sind alle Methoden der herkömmlichen Verformung denkbar, also beispielsweise das Durchwalzen des Vorfabrikates zwischen zwei oder mehr Walzen, oder eine Hybridtechnik, bei der eine gestreckte Form samt Vorfabrikat unter einer querprofilierten Walze durchgeführt oder diese über die Gegenform samt Vorfabrikat hinweggeführt wird, oder das Ringwalzen, wie es die Fig. 12 zeigt, anhand des bevorzugten Innenwalzens.

121 ist das äußere Formrad

122 ist das innere Druckrad (das Längungselement)

123 ist der noch unverformte und

124 der bereits geformte Kunststoffring.

Die Zeichnung ist sehr schematisch. In der Praxis wird man zumeist das innere Druckrad 122 nur allmählich, während mehrerer Umdrehungen, gegen das äußere Formrad 121 heranführen oder gar eine Vorverformung mittels eines ungezahnten Innenrades vornehmen. Das Ringwalzen kann auch von außen her erfolgen. Dabei wird der vorfabrizierte Ring zwischen zwei gezahnten Rädern im Kreis geführt.

Ein schematisches Beispiel eines ringgewalzten Fertigteiles zeigt Fig. 11 anhand der Andeutung eines gewalzten Zahnkranzes. Mit 111 ist die Außenkontur, mit 112 die anfertigungsbedingte (annähernd konturkonforme) Innenkontur und mit 113 ein bereich nach der Fertigbearbeitung mittels Innenausdrehen gezeigt.

Aus den Beispielen laut Figuren 13 und 14 ist ersichtlich, daß das Verfahren auch mit Druckwerkzeugen ausgeübt werden kann, deren formgebende Elemente aus mehr als zwei Teilen bestehen und/oder deren formgebende Ausbuchtungen und Einbuchtungen sich in anderen Winkeln als 180° gegenüberstehen.

In Fig. 13 ist ein zweiteiliges Werkzeug gezeigt, dessen eine Hälfte zwei formgebende Ebenen 131 und 132 aufweist, die zusammen mit dem anderen Werkzeugteil und dessen formgebender Ebene 133 eine Kombination von drei gedachten Formungsebenen ergibt.

Fig. 14 zeigt ähnliches, jedoch verteilt auf vier Werkzeugteile 141, 142, 143 und 144, wobei beispielsweise je zwei Paare vorausgehend schließen, um bei der Wiedereröffnung die unterschnitten eingeformten Zonen in umgekehrter Öffnungsweise wieder freizugeben.

Mit 141 und 142 sind ein oberer und ein unterer Werkzeugteil und mit 143 und 144 sind zwei seitliche Werkzeugteile bezeichnet. Mit 148 und 149 sind Verzahnungen der Werkzeugteile 143 und 144 angedeutet. Die Verfahrensschritte sind aus der mit 146 und 147 bezeichneten allmählich erfolgenden Umformung eines eingebrachten Halbzeuges 145 ersichtlich. Für den Fachmann ist es naheliegend, daß 141 bis 144 Preßwerkzeuge sein können, aber genauso damit ein Walzwerkzeug, eventuell auch das Schema einer Serie hintereinanderliegender Walzen verstanden werden kann.

Zusammenfassend kann zur Verarbeitungs-, Reckungs- und Werkzeuganwendung gesagt werden:

Sowohl nach linearen als auch mittels kreisender Methoden gibt es Möglichkeiten, die erfindungsgemäße Reckungsart auszuüben. Die Art des Werkstoffes, die Gestalt des Vorproduktes in seinem Quer- und Längsschnitt, die Verarbeitungstemperatur und die Gestalt des angestrebten Endproduktes, sind die wichtigsten Bestimmungsparameter zur Wahl der Reckmethode.

Als prinzipielle Varianten sind dabei zu nennen:

– Das diskontuierliche Verformen des gesamten Werkstückes,

– das schrittweise Verformen, Zone nach Zone,

– die kontinuierliche Formgebung, mit den weiteren (überlagernden) Verfahrensmerkmalen,

– das Prägerecken in einem Zuge

– oder allmählich formgebend auszuführen.

Fig. 1 und 2 könnten Beispiele sein für eine diskontinuierliche Prägreckung in einem Zuge, Fig. 16 bis 19 für schrittweise oder kontinuierliche allmähliche Formgebung und Fig. 12 (Innenwalzen) für diskontinuierliches allmähliches Prägerecken.

Aus dem Vorerwähnten geht hervor, daß alle der erwähnten Techniken auch auf gebogene Zahnungssegmente anwendbar sind. Die Entscheidung, ob mittels linear bewegter oder sich drehender Werkzeuge gearbeitet werden soll, hängt außer von der angestrebten Endgestalt des zu verformenden Vorfabrikates auch von der Vorformungstemperatur und der dabei gegebenen Duktilität des Vorfabrikates und der benötigten einmaligen oder sich mehrfach wiederholenden Verweilzeit des Formlings im eingreifenden Bereich des Druckwerkzeuges ab.

Ebenso ist zu entscheiden, ob Nebenformzonen, beispielweise Seitenwangen mit ausgebildet werden sollen oder gänzlich oder teilweise im Verhältnis Vorfabrikat zu Formhöhlung bereits vorgeben sind. Wichtig ist auch die Festlegung, in welchen Zonen des Druckwerkzeuges man eine möglichst enge Formdichtung erzielen will und/oder ob man in bestimmten Zonen dem Vorfabrikat Austriebsspalte aus dem Druckwerkzeug offen halten soll, um mittels des dort ermöglichten bevorzugten Werkstoffflusses spezielle Reckstrukturen zu erzielen.

5

Es ist naheliegend, das beschriebene Verfahren auch auf andere Zahnungsarten als die bisher beschriebenen auszudehnen, beispielsweise auf Seitenkranzzahnräder oder Zahnriemenräder mit erfindungsgemäßen Einbuchtungen und, gegebenenfalls, bereits wieder spanabhebend entfernten Ausbuchtungen auf der Gegenseite oder deren Belassung.

Prinzipiell muß nun noch zur äußeren Gestalt der inneren morphologischen Struktur und zum thermischen Zustand des Vorfabrikates Stellung genommen werden:

Wie schon einleitend gesagt, sollen unter "Vorfabrikat" die theoretisch zwar gemeinsamen, aber in der Praxis doch unterscheidend gebrauchten Begriffe "Vorformling" und "Halbzeug" zusammengefaßt werden.

Unter "Vorformling" wird dabei zumeist ein zur weiteren Verarbeitung oder Bearbeitung bestimmtes Produkt verstanden, das in seiner Längs- und/oder Quererstreckung und/oder seinem Dickeverlauf bereits eine gewisse Konturierung aufweist, die von geraden geometrischen Formen abweicht.

Unter "Halbzeug" versteht man zwar auch einen "Vorformling", doch wird zumeist darunter ein Produkt verstanden, das in seiner Längserstreckung einen einheitlichen Querschnitt aufweist, z.B. eine Platte, ein Rundstab, ein Drei- oder Mehrkantstab, ein Rundrohr, ein Kantrohr oder ein sonstiges durchgehendes Profil.

Diesen Gestaltgebungsunterschieden wird deshalb besondere Aufmerksamkeit gewidmet, weil die erfindungsgemäße Druckreckung sich des Gegenbereichsverformungseinflusses bedient und es daher von großem Einfluß ist, aus welcher Ausgangslage und welchem Ausgangsquerschnitt heraus das druckzureckende Vorfabrikat seine Fertiggestalt erhält. Es ist einleuchtend, daß die Reckungswege und die Reckungslängen unterschiedlich sind, je nachdem, ob beispielsweise eine Zahnstange aus einem vorgegebenen Rundstab oder aus einem Vierkantstab geprägt wird oder gar aus einem Vorfabrikat, das mitläufig oder gegenläufig zur vorgesehenen Verzahnung bereits Verdickungen oder Verdünnungen trägt.

Des weiteren ist zu beachten, daß das Vorfabrikat der vorgesehenen Verformungsmethode bzw. dem vorgesehenen Endprodukt angepaßt ist, also beispielsweise plattenförmig oder stabförmig längsgestreckt, plan oder längs- oder quergebogen, oder auch in sich annähernd oder ganz geschlossen, beispielsweise ringförmig ist.

Die herkunft des Vorfabrikates ist solange unerheblich, als seine Werkstoffart und der Grad seiner Vorverarbeitung eine erfindungsgemäße Weiterverarbeitung ermöglichen. Unter Beachtung dieser Gesichtspunkte kann das Vorfabrikat beispielsweise durch Guß, Spritzguß, Pressen, Extrudieren oder irgend einer anderen kunststofftechnischen Methode hergestellt sein oder eine Verstärkung, beispielsweise eine Faserverstärkung bereits in sich tragen oder zur Weiterverarbeitung mitbekommen.

Wichtig ist ferner auch die Möglichkeit, daß das Vorfabrikat bereits einem Orientierungsvorgang unterworfen war oder beim Eingang in die gegenständliche Reckung einem Orientierungsvorgang unterliegt. Solche vororientierte Kunststoffe können einer Umorientierung unterzogen werden. Dabei hängt es weitgehend von den Parametern des nachfolgenden Umformungsvorganges ab, inwieweit die Vororientierung in die Nachorientierung eingeht. Je nach der Art der Umformung, beispielsweise des durch das Umformwerkzeug gebotenen, veränderten Formraumes, der Verarbeitungstemperatur, dem Druck und der Fließweglänge samt Überflußwegen können die bei der Vororientierung eingebrachten richtungsabhängigen Eigenschaften verstärkt, umgelenkt oder vermindert werden.

Eine weitere Verarbeitungsvariante ist die Weiterverformungstemperatur. Es ist die Weiterverarbeitung von vorgeformten Teilen bekannt, deren Haut bereits erstarrt, deren Kern jedoch noch schmelzflüssig ist. Dabei erfährt die Haut, also die bereits erstarrte, aber thermoelastisch noch verformbare Schichte eine Reckung und die darunterliegende Zone eine Schmelzorientierung. Dabei wird es von untergeordneter Bedeutung oder Sache eines gesteuerten Vorganges sein, ob die innere Schmelze aus einem noch nicht abgeklungenem Herstellungsprozeß des Vorformlings oder von einer Wiedererwärmung entstammt.

Die umgekehrte Arbeitsweise, daß innen vororientierte, zum Beispiel gereckte Halbzeuge äußerlich wieder angeschmolzen werden, ist bisher nicht bekanntgeworden. Sie hat jedoch eine wesentliche Bedeutung, wenn ein Endprodukt erzielt werden soll, das innen die durch Orientierung erzielbare Verfestigung besitzt, aber an der Oberfläche und/oder den Oberflächen nahen Zonen infolge der Wiederschmelzung wieder orientierungslos oder orientierungsarm geworden ist, jedoch wieder wichtige Anfangseigenschaften beinhaltet. Dies ist besonders bedeutungsvoll, wenn Kunststoffgemische verarbeitet werden und die Außenzone infolge einer vorgegangenen Orientierung oder Reckung schon in einer unvorteilhaften Weise vorbeansprucht waren, beispielsweise infolge einer Gestaltswerzerrung inkorporierter Partikel.

Aus dem Vorhergesagten folgt, daß die beschriebene Arbeitsweise auch für noch nicht vororientierte Halbzeuge oder Formlinge wichtig sein kann, um eingefrorene Spannungen vor einer Umformung auszulösen. Das erfindungsgemäße Verfahren kann also auch Verwendung finden bei orientierten oder unorientierten halbzeugen oder Formlingen, die bei der Weiterverformung außen oder innen geschmolzensind oder nachträglich in der Oberflächenzone geschmolzen oder nachverformt werden.

Es ist auch darauf hinzuweisen, daß die vorstehend geschilderten Verfahren sich nur auf Druckverformung beziehen. Sofern sich in Details Konturähnlichkeiten auch mittels Zug- oder Tiefzugverfahren erzielen lassen sollten, ist auf die nachweisbare Orientierungsdifferenz bzw. Umkristallisierungsdifferenz zu verweisen, sowie auf den gravierenden Unterschied, daß bei einer Druckreckung die Zugzonen als eines der mehreren Resultate der Schubausführung entstehen und insbesondere darauf, daß mittels des gegenständlichen Verfahrens ein umzuformendes Vorfabrikat nicht nur wie beim Tiefziehen an eine einseitig vorgegebene Wandkontur angeformt wird, sondern auch von der Gegenseite her formgestalterisch und dadurch auch strukturgestalterisch geprägt wird.

Ergänzend soll erwähnt werden, daß die im Gegenbereich geprägten Ein- und Ausbuchtungen, insbesondere die Ausbuchtungen je nach Prägetiefe in einem weiteren Schritt teilweise oder ganz entfernt werden können, beispielsweise mit einer spanabhebenden Methode.

Drenkbar ist aber auch, daß diese Einprägungen des Gegenbereiches, wenn sie verzähnungsgerecht ausgebildet sind, im Gebrauch zu einem beidseitigen oder mehrseitigen Zahneingriff genutzt werden oder wenn sie verzahnungsähnlich sind, zu einem Eingriff von Abstützrollen.

Ebenso denkbar ist aber auch, daß bei einem erfindungsgemäßen kreisförmig geschlossenen Gebilde die zahnähnlich konturierte Formgebung des Gegenbereiches zum formschlüssigen Umfassen eines keilverzahnten Radkörpers oder einer keilverzahnten Welle und dergleichen genutzt wird.

## Patentansprüche

1. Verfahren zur Herstellung von gezahnten Profilteilen, beispielsweise von Zahnstangen, Zahnkränzen, Zahnsegmenten od. dgl., wobei das Material eines Vorfabrikates untee plastischer Verformung mittels eines Werkzeuges in die gezahnte Profilierung eines Gegenwerkzeuges prägend eingepreßt wird, dadurch gekennzeichnet,
– daß die mit dem Vorfabrikat (5) in Wirkverbindung tretenden, formenden Flächen (3,4) beider Werkzeuge (1,2) zumindest annähernd korrespondierende, gezahnte Profilierungen aufweisen;
– daß beim Prägevorgang die Werkzeuge (1,2) einander so weit genähert werden, daß die Zähne der Profilierung des einen Werkezuges in die Zahnlücken der Profilierung des anderen Werkzeuges bzw. umgekehrt dringen;
– daß das Vorfabrikat (5) aus thermoplastischem teilkristallinem Kunststoff besteht und zumindest in einem Teil seines zu verformenden Bereiches eine unterhalb seiner Schmelztemperatur liegende Verarbeitungstemperatur aufweist und dort durch die erfindungsgemäße Verfahrensausübung eine mehrdimensionale Molekülorientierung mittels Reckung erfährt und
– daß die in Präge- oder Arbeitsrichtung gemessene Dicke des Vorfabrikates der doppelten bis halben Tiefe bzw. Höhe der gezahnten Profilierung der Werkzeuge (1,2) entspricht.

2. Verfahren nach Anspruch 1, dadurch gekennzeichnet, daß der Querschnitt bzw. das zonenweise Volumen des zur Verformung vorgesehenen Vorfabrikates in jeweils jener Größenordnung vorgegeben werden, mittels derer sowohl der Reckungsgrad als auch die Wandstärken des zu fertigenden Teiles in Hinblick auf die Eingriffsparameter des Druckwerkzeuges beim verformenden Einschließen vorwählbar sind bzw. vorbestimmt sind.

3. Verfahren nach einem der Ansprüche 1 oder 2, dadurch gekennzeichnet, daß Nebenformzonen, beispielsweise Seitenwangen mitausgebildet werden oder gänzlich oder teilweise im Verhältnis Vorfabrikat zu Formhöhlung bereits vorgegeben sind und daß es eine Teilumlenkung oder eine Vollumlenkung erfährt, je nachdem welche Orientierung oder Orientierungsrichtung für die Verwendung des herzustellenden Produktes wichtig ist. bzw. sind.

4. Verfahren nach einem der Ansprüche 1 bis 4, dadurch gekennzeichnet, daß es bei orientierten oder unorientierten Halbzeugen oder Formlingen, die bei der Weiterverformung außen oder innen geschmolzen sind oder nachträglich in der Oberflächenzone geschmolzen oder nachverformt werden, angewendet wird.

## Claims

1. A method of manufacturing toothed profiled parts, for example toothed racks, toothed wheels, toothed segments or the like, wherein the material of a semi-manufactured article under plastic deformation is pressed in a moulded manner by means of a tool into the toothed profiling of a reverse tool, characterised in that
– the shaping surfaces (3, 4) of both tools (1, 2), which tools enter into operative connection with the semi-manufactured article (5), have at least approximately corresponding toothed profiling,
– the tools (1, 2) are brought far enough together during the moulding process for the teeth of the profiling of one tool to penetrate the tooth gaps of the profiling of the other tool or vice versa,

– the semi-manufactured article (5) comprises thermoplastics, partially crystalline synthetic material and has at least in one part of its region to be worked a processing temperature lying below its melting temperature and there undergoes a multi-dimensional molecular orientation by means of stretching as a result of the execution of the method according to the invention, and

– the thickness of the semi-manufactured article measured in the moulding or working direction corresponds to between double and half the depth or height of the toothed profiling of the tools (1, 2).

2. A method according to claim 1, characterised in that the cross-section or the zone-wise volume of the semi-manufactured article provided for working are each preset to that size by means of which both the degree of stretching and the wall thicknesses of the part to be manufactured are preselectable or predetermined with respect to the meshing parameters of the pressure tool during the forming embedding process.

3. A method according to either one of claims 1 or 2, characterised in that adjacent moulded zones, for example side walls, are also formed or are already wholly or partially assumed in the relationship between semi-manufactured article and moulded cavity and in that the said semi-manufactured article undergoes a partial reorientation or a complete reorientation, depending on which orientation or direction of orientation is or are important for the use of the product to be manufactured.

4. A method according to any one of claims 1 to 4, characterised in that it is applied in the case of orientated or unorientated semi-finished products or moulded articles which during further working are melted on the inside or outside or are subsequently melted or after-worked in the surface zone.

## Revendications

1. Procédé de production de pièces à profil denté et, par exemple, de crémaillères, de couronnes dentées, de segments dentés ou analogues, dans lequel le matériau d'une ébauche est pressé avec emboutissage sous déformation plastique au moyen d'un outil dans le profil denté d'un contre-outil, caractérisé en ce que ;

– les faces (3, 4) des deux outils (1, 2) de formage entrant en action sur l'ébauche (5) présentent des profils dentés au moins approximativement correspondants;

– au cours du processus d'emboutissage, les outils (1, 2) sont rapprochés suffisamment l'un de l'autre pour que les dents du profil d'un outil pénètrent dans les intervalles des dents du profil de l'autre outil et inversement.

– l'ébauche (5) est constituée de matière thermoplastique partiellement cristalline et présente au moins dans une partie de son domaine de mise en forme, une température de travail située en dessous de sa température de fusion et subit une orientation moléculaire multidimensionnelle par allongement grâce à la mise en oeuvre du procédé de la présente invention, et

– l'épaisseur de l'ébauche mesurée dans la direction d'emboutissage ou de travail correspond à une valeur comprise entre le double et la moitié de la profondeur ou de la hauteur du profil denté des outils (1, 2).

2. Procédé selon la revendication 1, caractérisé en ce que la section ou le volume de la zone de l'ébauche prévue pour la mise en forme sont prédéterminés avec l'ordre de grandeur suivant lequel tant le degré d'étirement que l'épaisseur des parois de la pièce à fabriquer sont choisis d'avance ou prédéterminés en fonction des paramètres d'action de l'outil de compression au cours de l'emboutissage de mise en forme.

3. Procédé selon l'une des revendications 1 ou 2, caractérisé en ce que les zones de formage latérales, par exemple les bords latéraux, sont également formés ou sont prédéterminés déjà totalement ou partiellement dans le rapport de l'ébauche au creux du moule et qu'il se produit une déviation partielle ou une déviation complète en fonction de l'orientation et de la direction de l'orientation pour lesquelles l'utilisation du produit à fabriquer et ou sont importantes.

4. Procédé selon l'une des revendications 1 à 4, caractérisé en ce qu'il est utilisé pour des demi-produits ou des ébauches orientées ou non-orientées qui sont fondues extérieurement ou intérieurement après leur mise en forme ou qui sont fondus ou remis en forme ultérieurement dans la zone superficielle.

Fig. 1

Fig. 2

Fig. 3

Fig. 4

Fig. 5

Fig. 6

Fig. 7

Fig.8

Fig. 9

Fig. 10

Fig.12

Fig. 13

Fig. 11

112

111

113

Fig. 16

Fig.17

Fig. 18

Fig. 19

Fig. 15

Fig. 14a

141

143

144

145

142

Fig. 14b

143

141 144

142

146

Fig. 14c

141

143

144

148 149

142

147